# EUROPÄISCHE PATENTSCHRIFT

(11) **EP 1 441 921 B1**
(45) Veröffentlichungstag und Bekanntmachung des Hinweises auf die Patenterteilung: **10.09.2008**
(21) Anmeldenummer: 02767394.6
(22) Anmeldetag: 16.08.2002
(51) Int. Cl.: B60J 5/04

(54) **PLATINE, KAROSSERIETEIL UND VERFAHREN ZUR HERSTELLUNG EINES SOLCHEN KAROSSERIETEILS**
BLANK, CHASSIS COMPONENT AND METHOD FOR PRODUCTION OF SAID CHASSIS COMPONENT
FLAN, PIECE DE CARROSSERIE ET PROCEDE DE PRODUCTION D'UNE TELLE PIECE DE CARROSSERIE

(30) Priorität: 10.11.2001 DE 10155403
(43) Veröffentlichungstag der Anmeldung: 04.08.2004
(73) Patentinhaber: ThyssenKrupp Steel AG, 47166 Duisburg (DE)
(72) Erfinder: PATBERG, Lothar Dr.-Ing., 47445 Moers (DE)
(74) Vertreter: Simons, Johannes
(86) Internationale Anmeldenummer: PCT/EP2002/009158
(87) Internationale Veröffentlichungsnummer: WO 2003/041978

(56) Entgegenhaltungen:
- DE-A- 10 001 753
- US-A- 4 969 680
- US-A- 5 536 060
- US-A- 6 038 911
- US-A1- 2001 007 269

## Beschreibung

Die Erfindung betrifft eine Platine für die Herstellung eines Außenblechs für ein Karosserieteil, ein solches Karosserieteil, insbesondere eine wie Z.B. inder DE 10001753 A offenbarte kraftfahrzeugtür, und ein Verfahren zur Herstellung eines solchen Karosserieteils.

Gesteigerte Anforderungen an den Schutz der Insassen von Kraftfahrzeugen haben dazu geführt, daß auch der Seitenbereich der Karosserie verstärkt gegen einen Aufprall im Fall einer Kollision mit einem anderen Fahrzeug oder mit einem Gegenstand geschützt wird. Üblicherweise werden dazu sogenannte "Seitenaufprallträger" innerhalb der Fahrzeugtüre befestigt.

Diese Träger bestehen in der Regel aus einem hochfesten Stahlmaterial, welches im Fall eines Aufpralls ein hohes Energieaufnahmevermögen besitzt. Durch die Verwendung solcher Seitenaufprallträger ist der Schutz der Fahrzeuginsassen deutlich verbessert worden. Allerdings führen sie zu einer deutlichen Erhöhung des Gewichts der Türen.

Letzteres ist insbesondere im Hinblick auf die allgemein angestrebte Gewichtsreduzierung von Fahrzeugkarosserien nachteilig. Darüber hinaus macht die Befestigung der Seitenaufprallträger mehrere Arbeitsschritte erforderlich, die zusätzlich zu den sonstigen Arbeitsschritten bei der Karosseriefertigung durchgeführt werden müssen. Diese übliche Karosseriefertigung umfaßt die Fertigung des Innen- und des Außenblechs der jeweiligen Fahrzeugtür durch Kaltumformen jeweils eines Blechzuschnitts, in den beispielsweise die für die Fensteröffnung benötigte Ausnehmung eingeformt ist. Anschließend wird der Seitenaufprallträger durch Kleben oder Schweißen auf der dem Außenblech zugeordneten Seite des Innenblechs befestigt. Zuletzt wird dann das Außenblech auf das mit dem Seitenaufprallträger ausgestattete Innenblech gesetzt und beide Bleche durch Umbördeln der Randbereiche miteinander verbunden. In vergleichbarer Weise können die anderen Außenbleche der Karosserie im Bereich der die Fahrgastzelle umgebenden seitlichen Karosserieteile für den Fall eines seitlichen Aufpralls verstärkt werden.

Es ist versucht worden, die Steifigkeit von Kraftfahrzeugtüren dadurch weiter zu verbessern, daß das Außenblech der Fahrzeugtüre durch eine innere und eine äußere Blechschale gebildet ist (DE 39 34 590 C2). Die innere und die äußere Blechschale können dabei jeweils einstückig als Pressblechteil ausgebildet sein. Ein weiter verbesserter Aufprallschutz kann dabei dadurch erreicht werden, das die innere Blechschale im Zuge ihrer Herstellung so profiliert wird, daß sie im aufprallgefährdeten Bereich der Türe einen Seitenaufprallträger bildet, der dann an der Außenschale anliegt. Durch einen solchen doppelschaligen Aufbau läßt sich zwar eine Versteifung der Kraftfahrzeugtüre erreichen. Der zur Herstellung einer solchen Türe erforderliche Aufwand ist jedoch erheblich. Hinzukommt, daß in den Fällen, in denen die innere Schale auch den Seitenaufprallträger umfaßt, die Festigkeit dieses Seitenaufprallträgers durch die Anforderungen begrenzt ist, die an die Verformbarkeit des für die Herstellung der inneren Schale verwendeten Blechmaterials gestellt werden. Auch der mit der Herstellung der aus der DE 39 34 590 C2 bekannten Kraftfahrzeugtüre verbundene Aufwand ist daher beträchtlich.

Die Aufgabe der Erfindung besteht darin, die kostengünstige Herstellung von Außenblechen für Karosserieteile, insbesondere Kraftfahrzeugtüren, zu ermöglichen, die einen hohen Schutz der Insassen eines Fahrzeugs im Falle eines Seitenaufpralls bieten.

Diese Aufgabe wird in der Erfindung durch eine Platine für die Herstellung eines Blechs für ein Karosserieteil einer Kraftfahrzeugkarosserie, insbesondere für eine Kraftfahrzeugtür, durch Kaltumformen gelöst, die mit zwei Verformungsabschnitten, die aus einem gut verformbaren Blech bestehen und dazu vorgesehen sind, im Zuge der Kaltumformung einer hohen Umformung unterworfen zu werden, und mit einem Trägerabschnitt, der zwischen den beiden Verformungsabschnitten angeordnet ist und aus einem eine erhöhte Festigkeit aufweisenden, insbesondere hochfesten, Material gebildet ist, welches dazu vorgesehen ist, im Zuge der Kaltumformung nur einem geringen Umformgrad unterworfen zu werden und nach der Umformung der Platine den Seitenaufprallträger des jeweiligen Karosserieteils zu bilden.

Dem gleichen Gedanken folgend umfasst die Erfindung auch eine Kraftfahrzeugtür, die mindestens ein Blech aufweist, das einen aus einem dünnwandigen Blechmaterial geformten, oberen Abschnitt, einen fest mit dem oberen Abschnitt verbundenen und sich über die Breite der Tür erstreckenden Trägerabschnitt sowie einen unteren ebenfalls aus einem dünneren Blechmaterial geformten und fest mit dem Trägerabschnitt verbundenen Abschnitt aufweist, wobei der Trägerabschnitt aus einem Material mit erhöhter Festigkeit besteht.

Schließlich umfasst die Erfindung ein Verfahren zur Herstellung eines Außenblechs für ein Karosserieteil eines Kraftfahrzeugs, insbesondere zur Herstellung des Außenblechs einer erfindungsgemäß ausgebildeten Kraftfahrzeugtür, bei dem eine Platine gebildet wird, indem an die Längsseiten eines aus einem eine erhöhte Festigkeit aufweisenden Blechmaterial gebildeten Trägerabschnitts jeweils ein Umformabschnitt angeschlossen wird, der aus einem gut umformbaren, sich von dem Material des Trägerabschnitts unterscheidenden Blechmaterial besteht, und bei dem aus der Platine ein Blech des Karosserieteils kaltgeformt wird.

Den verschiedenen Aspekten der Erfindung liegt der gemeinsame Gedanke zugrunde, in eine für die Herstellung des jeweiligen Karosserieteils benötigte Platine an geeigneter Stelle einen Trägerabschnitt einzusetzen, der die Funktion eines Seitenaufprallträgers erfüllen kann. Dieser Trägerabschnitt weist eine erhöhte Festigkeit und ein besonders gutes Energieaufnahmevermögen auf und ist als solcher hinsichtlich der ihm zugedachten Aufgabe, nämlich den Schutz der Insassen im Fall eines seitlichen Aufpralls zu gewährleisten, optimiert. Die an den Trägerabschnitt angeschlossenen Blechabschnitte lassen sich dagegen hinsichtlich ihrer Materialeigenschaften und Gestaltung so auslegen, daß sie sich optimal in die jeweils gewünschte Karosserieform kaltumformen lassen.

Die für die Herstellung eines erfindungsgemäß ausgebildeten Karosserieteils ebenso erfindungsgemäß vorbereitete Platine ist dazu nach Art eines sogenannten "Tailored blanks" aus Blechabschnitten zusammengesetzt, die jeweils unterschiedliche Materialeigenschaften aufweisen. Auf diese Weise läßt sich das Verhalten des Platinenmaterials und seine Eigenschaftsverteilung sowohl auf die sich während der Verarbeitung als auch auf die sich im Einsatz der fertig verformten Platine stellenden unterschiedlichen Anforderungen abstimmen.

Durch die Integration des Trägerabschnitts in das betreffende Blech wird zudem der bisher stets erforderliche Schritt der Befestigung des Seitenaufprallträgers an dem jeweiligen Karosserieteil eingespart. Darüber hinaus wird durch die Einbeziehung des Seitenaufprallträgers in die Außenhaut des Fahrzeugs das Gewicht gespart, welches nach herkömmlicher Herstellweise durch die Befestigung eines separaten Trägers für die Erhöhung der Sicherheit der Fahrzeuginsassen in Kauf genommen werden mußte.

Ein weiterer Vorteil der Erfindung besteht darin, daß die Beulsteifigkeit des erfindungsgemäß beschaffenen Blechs verbessert wird. Dieser Vorteil macht sich insbesondere dann bemerkbar, wenn es sich bei dem erfindungsgemäß zusammengesetzten Blech um ein Außenblech der Karosserie handelt. Durch die direkte Verbindung des Trägerabschnitts mit den an ihn angeschlossenen oberen und unteren Abschnitten des Außenblechs kann der Trägerabschnitt die jeweils leichter verformbaren Abschnitte des Karosserieteils stützen. Auf diese Weise können sehr dünne und dementsprechend leichte und einfach verformbare Bleche für die an den Trägerabschnitt angeschlossenen Umformabschnitte verwendet werden. Auch dies trägt sowohl zur verbesserten Verarbeitbarkeit als auch zum minimierten Gewicht erfindungsgemäß erzeugter Karosserieteile bei.

Durch die direkte Verbindung des Trägerabschnitts mit den an ihn angrenzenden, einer hohen Umformung unterworfenen Abschnitten entfällt zudem die Dickschichtklebung, die bei der herkömmlichen Befestigung eines Seitenaufprallträgers regelmäßig erforderlich ist.

Schließlich weisen aus erfindungsgemäßen Platinen bzw. erfindungsgemäß erzeugte Karosserieteile ein verbessertes Komfortverhalten auf. So kann es in Folge der erfindungsgemäßen Einbeziehung des Trägerabschnitts in das Außenblech des jeweiligen Karosserieteils nicht mehr dazu kommen, daß das Außenblech aufgrund von Fahrzeugerschütterungen gegen den Seitenaufprallträger schlägt. Unangenehme Klappergeräusche werden auf diese Weise sicher vermieden. Ebenso steht in dem vom Innen- und Außenblech umschlossenen Raum des erfindungsgemäßen Karosserieblechs durch den Wegfall des gesondert montierten Seitenaufprallträgers zusätzlicher Bauraum zur Verfügung, der gegebenenfalls für den Einbau von dem zusätzlichen Komfort der Fahrzeuginsassen dienenden Aggregaten genutzt werden kann.

Besonders positiv wirkt sich die Erfindung bei der Herstellung von Fahrzeugtüren aus. Gerade diese Karosserieelemente eignen sich im besonderen Maße für die Anwendung der Erfindung, weil sich bei ihnen die Umformverhältnisse so wählen lassen und der Trägerabschnitt sich so positionieren läßt, daß die unterschiedliche Verformbarkeit der einzelnen Abschnitte der der Herstellung zugrunde gelegten Platine besonders vorteilhaft genutzt werden können.

Gemäß einer ersten vorteilhaften Ausgestaltung der Erfindung sind die Verformungsabschnitte und der Trägerabschnitt stoffschlüssig miteinander verbunden, insbesondere miteinander verschweißt. Auf diese Weise bilden die einzelnen Abschnitte der erfindungsgemäßen Platine einen festen Verbund, der einerseits während der Herstellung leicht und sicher beherrschbar ist und andererseits im fertig montierten Zustand ein sicher vorausbestimmbares Verhalten zeigt.

Die Schutzwirkung des Trägerabschnitts wird einerseits durch die Eigenschaften des für seine Herstellung verwendeten Materials bestimmt. Darüber hinaus kann seine Festigkeit und sein Energieaufnahmeverhalten im Fall eines Crashs auch durch eine geeignete Formgebung eingestellt werden. Gemäß einer bevorzugten Ausführung der Erfindung ist der Trägerabschnitt daher profiliert. So kann er beispielsweise durch Rollformen oder vergleichbare Formgebungsverfahren in eine Form gebracht werden, durch die die Steifigkeit des Trägerabschnitts unterstützt wird. Dazu kann in den Trägerabschnitt beispielsweise mindestens eine Versteifungssicke eingeformt sein. Diese Versteifungssicke erstreckt sich dabei allerdings bevorzugt nicht über die gesamte Breite des jeweiligen Zuschnitts. Statt dessen ist es günstig, wenn der Trägerabschnitt an seinen Schmalseiten jeweils einen unprofilierten Randbereich aufweist und die Versteifungssicke sich zwischen diesen unprofilierten Randbereichen erstreckt. Auf diese Weise stehen an den seitlichen Enden des Trägerabschnitts jeweils Bereiche zur Verfügung, an denen in konventioneller Weise eine Verbindung mit dem jeweils angrenzenden Blech des Karosseriebauteils hergestellt werden kann.

Grundsätzlich lassen sich für die Umsetzung der Erfindung alle Werkstoffe verwenden, die einerseits das erforderliche Umformvermögen aufweisen und andererseits eine Festigkeit besitzen, die den an das Schutzverhalten des Trägerabschnitts gestellten Anforderungen genügen. In besonders günstiger Weise erfüllt dieses Anforderungsprofil der Werkstoff Stahl, aus dem sich einerseits Verformungsabschnitte herstellen lassen, die eine hervorragende Verformbarkeit besitzen, und andererseits Trägerabschnitte fertigen lassen, die eine hohe Steifigkeit und ein Energieaufnahmevermögen im Crashfall auf höchstem Niveau besitzen.

Grundsätzlich ist es auch im Fall der Verwendung eines profilierten Trägerabschnitts möglich, durch eine geeignete Oberflächenbeschichtung die mit der Profilierung verbundenen Unebenheiten an der nach außen gewandten Oberfläche des Blechs einer erfindungsgemäßen Karosserietür zu verdecken. Dieser Aufwand kann gemäß einer besonders praxisgerechten Ausgestaltung der Erfindung dadurch vermieden werden, daß der Trägerabschnitt auf seiner im Montagezustand außenliegenden Außenseite durch eine Schutzleiste verdeckt ist.

Besonders günstig ist es, wenn der Trägerabschnitt während der Kaltumformung der Platine im wesentlichen keiner Verformung unterworfen wird. Auf diese Weise wird dem Umstand Rechnung getragen, daß die Verformbarkeit des Trägerabschnitts mit zunehmender Festigkeit abnimmt. Die Beachtung dieser Maßgabe ermöglicht es daher, besonders feste Werkstoffe für den Trägerabschnitt zu verwenden, die einen besonders hohen Schutz der Insassen des Fahrzeugs sicherstellen.

Nachfolgend wird die Erfindung anhand einer ein Ausführungsbeispiel darstellenden Zeichnung näher erläutert. Es zeigen schematisch:
- Fig. 1a: die noch voneinander getrennten Blechabschnitte zur Fertigung einer Platine für die Herstellung einer Fahrzeugtür im unverformten Zustand in einer frontalen Ansicht,
- Fig. 1b: die in Fig. 1a dargestellten Abschnitte in einem Schnitt entlang der in Fig. 1a eingezeichneten Linie A-A;
- Fig. 2a: eine aus den in Fig. 1a dargestellten Abschnitten gebildete Platine in frontaler Ansicht;
- Fig. 2b: die in Fig. 2a dargestellte Platine in einem Schnitt entlang der in Fig. 2a eingezeichneten Linie B-B;
- Fig. 3a: ein aus der in Fig. 2a dargestellten Platine kaltverformtes Außenblech für eine Fahrzeugtür in frontaler Ansicht;
- Fig. 3b: das in Fig. 3a dargestellte Außenblech in einem Schnitt entlang der in Fig. 3a eingezeichneten Linie C-C;

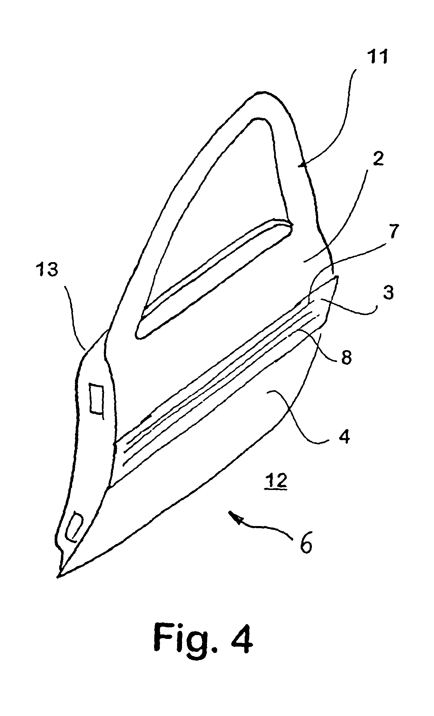

- Fig. 4: eine Fahrzeugtür in perspektivischer Ansicht;
- Fig. 5a: einen Ausschnitt der für die Herstellung des Außenblechs der in Fig. 4 dargestellten Fahrzeugtür verwendeten Platine im unverformten Zustand,
- Fig. 5b: einen Ausschnitt des Außen- und Innenblechs der in Fig. 4 dargestellten Fahrzeugtür nach einer ersten Verformung der in Fig. 5a dargestellten Platine,
- Fig. 5c: den Ausschnitt des Außenblechs der in Fig. 4 dargestellten Fahrzeugtür nach einem weiteren Verarbeitungsschritt;
- Fig. 6: das Außenblech in einem Schnitt entlang der in Fig. 5c eingezeichneten Linie D-D.

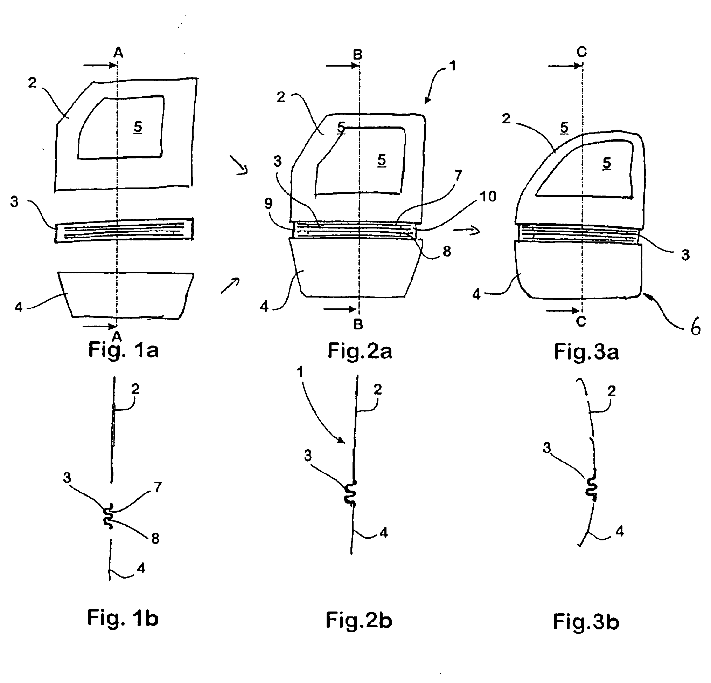

Die in den Figuren 2a,2b dargestellte Platine 1 ist aus einem oberen Verformungsabschnitt 2, einem sich an den oberen Verformungsabschnitt 2 anschließenden Trägerabschnitt 3 und einem zweiten an die Unterseite des Trägerabschnitts 3 anschließenden unteren Verformungsabschnitt 4 zusammengesetzt.

Der obere Verformungsabschnitt 2 besteht aus einem sehr dünnen Stahlwerkstoff, der eine hervorragende Verformbarkeit besitzt. In den Verformungsabschnitt 2 ist im vorliegenden Ausführungsbeispiel eine Öffnung 5 eingeformt, die im fertig verformten Zustand der Platine 1 die Fensteröffnung des Außenblechs 11 der fertigen Kraftfahrzeugtüre 6 bildet. Der obere Verformungsabschnitt 2 ist mit der oberen Seite des Trägerabschnitts 3 beispielsweise durch eine Laserschweißung stoffschlüssig verbunden.

Der Trägerabschnitt 3 besteht aus einem hochfesten Stahl, der bei einer crashbedingten Verformung ein hohes Energieaufnahmevermögen besitzt. Er weist eine langgestreckte, schmale Form auf und erstreckt sich streifenartig an der Stelle über die Breite der herzustellenden Kraftfahrzeugtüre 6, an der im Fall eines seitlichen Aufpralls mit der größten Wahrscheinlichkeit die höchsten Kräfte wirken. Bei einer für einen PKW bestimmten Fahrzeugtür ist der Trägerabschnitt 3 dazu so angeordnet, daß er im Bereich der üblichen Höhe von Kraftfahrzeugstoßstangen positioniert ist.

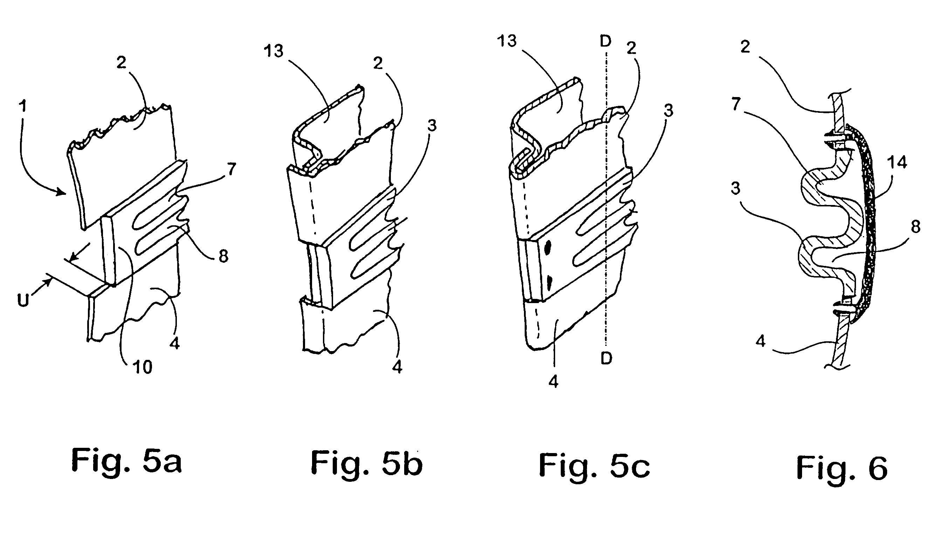

Die Breite des Trägerabschnitts 3 entspricht im vorliegenden Ausführungsbeispiel der Breite der Kraftfahrzeugtüre 6 im fertigen Zustand und ist im unverformten Zustand (Figuren 2a,2b; Fig. 5a) um ein Untermaß U kleiner als die Breite des oberen und des unteren an ihn angeschlossenen unverformten Verformungsabschnitts 2 bzw. 4, so daß die Verformungsabschnitte 2,4 vor der Endmontage der Fahrzeugtüre 6 seitlich über die Enden des Trägerabschnitts 3 hinausstehen.

In den Trägerabschnitt 3 sind zwei parallel zueinander sich in Breitenrichtung des Trägerabschnitts 3 erstreckende Versteifungssicken 7,8 durch Rollformen eingeformt. Die Versteifungssicken 7,8 enden dabei jeweils kurz vor dem in Breitenrichtung gesehenen seitlichen Rand des Trägerabschnitts 3, so daß dort jeweils ein unverformter Randbereich 9,10 vorhanden ist, in welchem der Trägerabschnitt 3 der Platine 1 im unverformten Zustand im wesentlichen eben ausgebildet ist.

An den unteren Rand des Trägerabschnitts 3 ist der untere Verformungsabschnitt 4 angeschweißt. Er besteht wie der erste Verformungsabschnitt 2 aus einem dünnen, besonders gut verformbaren Stahlwerkstoff.

Die derart zusammengesetzte Platine 1 wird in einer nicht dargestellten Presse zu einem Außenblech 11 kaltverformt, welches eine nach außen gewölbte Form aufweist. In diesem Zustand sind die im unverformten Zustand der Platine 1 seitlich über den Trägerabschnitt 3 hinausstehenden Randbereiche der Verformungsabschnitte 2,4 im wesentlichen rechtwinklig von der Außenseite 12 des Außenblechs 11 wegweisend ausgerichtet (Figuren 3a,3b und Fig. 5b). Die Kaltumformung der Platine 1 wird dabei so geführt, daß der Trägerabschnitt 3 im wesentlichen frei von einer Verformung bleibt.

Auf das derart beschaffene Außenblech 11 wird das in einem getrennten, hier nicht weiter erläuterten Arbeitsgang erzeugte Innenblech 13 der Kraftfahrzeugtür 6 gelegt und verspannt. Dabei kommen die von den Versteifungssicken 7,8 freien Randbereiche 9,10 zur Anlage an die ihnen zugeordneten Randflächen des Innenblechs 13, auf denen sie jeweils im wesentlichen plan aufliegen. Anschließend wird durch eine Laserstrahlschweißung oder ein anderes geeignetes Schweißverfahren der Trägerabschnitt 3 mit dem Innenblech 13 verbunden. Die freien Randbereiche der Verformungsabschnitte 2,4 werden dagegen um den Rand des Innenblechs 13 gebördelt und mit dem Innenblech 13 verschweißt oder verklebt (Fig. 5c).

Nach dem Lackieren der Außenseite 12 des Außenblechs 11 wird der Trägerabschnitt 3 durch eine Schutzleiste 14 verdeckt, die in an sich bekannter Weise über entsprechende, in im Außenblech 11 eingeformte Öffnungen greifende Vorsprünge mit dem Außenblech 11 verrastet wird.

### BEZUGSZEICHEN

- 1: Platine
- 2,4: Verformungsabschnitte
- 3: Trägerabschnitt
- 5: Öffnung
- 6: Kraftfahrzeugtüre
- 7,8: Versteifungssicken
- 9,10: unverformter Randbereich
- 11: Außenblech
- 12: Außenseite des Außenblechs 11
- 13: Innenblech der Kraftfahrzeugtür 6
- 14: Schutzleiste

- U: Untermaß

## Patentansprüche

1. Platine für die Herstellung eines Blechs (11) für ein Karosserieteil einer Kraftfahrzeugkarosserie, insbesondere für eine Kraftfahrzeugtür (6), durch Kaltumformen mit
- zwei Verformungsabschnitten (2,4), die aus einem gut verformbaren Blechmaterial bestehen und dazu bestimmt sind, im Zuge der Kaltumformung einer hohen Umformung unterworfen zu werden, und
- einem Trägerabschnitt (3), der zwischen den beiden Verformungsabschnitten (2,4) angeordnet ist und aus einem eine erhöhte Festigkeit aufweisenden Material gebildet ist, wobei der Trägerabschnitt (3) dazu bestimmt ist, im Zuge der Kaltumformung nur einem geringen Umformgrad unterworfen zu werden und nach der Umformung der Platine (1) den Seitenaufprallträger des jeweiligen Karosserieteils zu bilden.

2. Platine nach Anspruch 1, **dadurch gekennzeichnet, daß** die Verformungsabschnitte (2,4) und der Trägerabschnitt (3) stoffschlüssig miteinander verbunden sind.

3. Platine nach Anspruch 2, **dadurch gekennzeichnet, daß** die Verformungsabschnitte (2,4) und der Trägerabschnitt (3) miteinander verschweißt sind.

4. Platine nach einem der voranstehenden Ansprüche, **dadurch gekennzeichnet, daß** der Trägerabschnitt (3) profiliert ist.

5. Platine nach einem der voranstehenden Ansprüche, **dadurch gekennzeichnet, daß** in den Trägerabschnitt (3) mindestens eine Versteifungssicke (7,8) eingeformt ist.

6. Platine nach Anspruch 4 oder 5, **dadurch gekennzeichnet, daß** der Trägerabschnitt (3) an seinen Schmalseiten jeweils einen unprofilierten Randbereich (9,10) aufweist.

7. Platine nach einem der voranstehenden Ansprüche, **dadurch gekennzeichnet, daß** die Verformungsabschnitte (2,4) und der Trägerabschnitt (3) aus einem Stahlmaterial hergestellt sind.

8. Kraftfahrzeugtür, die mindestens ein Blech (10) aufweist, das einen aus einem dünnwandigen Blechmaterial geformten oberen Abschnitt (2), einen fest mit dem oberen Abschnitt (2) verbundenen und sich über die Breite der Tür erstreckenden Trägerabschnitt (3) sowie einen unteren ebenfalls aus einem dünneren Blechmaterial geformten und fest mit dem Trägerabschnitt verbundenen Abschnitt (4) aufweist, **dadurch gekennzeichnet, dass** der Trägerabschnitt (3) aus einem eine erhöhte Festigkeit aufweisenden Material besteht.

9. Kraftfahrzeugtür nach Anspruch 8, **dadurch gekennzeichnet, daß** der obere Abschnitt (2) eine Fensteröffnung (5) umfaßt.

10. Kraftfahrzeugtür nach einem der Ansprüche 8 oder 9, **dadurch gekennzeichnet, daß** der Trägerabschnitt (3) auf seiner im Montagezustand außenliegenden Außenseite (12) durch eine Schutzleiste (14) verdeckt ist.

11. Kraftfahrzeugtür nach einem der Ansprüche 8 bis 10, **dadurch gekennzeichnet, daß** das Blech das Außenblech (10) ist.

12. Verfahren zur Herstellung eines Blechs (10) für ein Karosserieteil eines Kraftfahrzeugs, insbesondere zur Herstellung eines Blechs (10) einer gemäß einem der Ansprüche 8 bis 11 beschaffenen Kraftfahrzeugtür (6),
- bei dem eine Platine (1) gebildet wird, indem an die Längsseiten eines aus einem Blechmaterial mit erhöhter Festigkeit gebildeten Trägerabschnitts (3) jeweils ein Verformungsabschnitt (2,4) angeschlossen wird, der aus einem gut umformbaren, sich von dem Material des Trägerabschnitts unterscheidenden Blechmaterial besteht, und
- bei dem aus der Platine (1) das Blech (10) des Karosserieteils kaltgeformt wird.

13. Verfahren nach Anspruch 12, **dadurch gekennzeichnet, daß** der Trägerabschnitt (3) mit den Verformungsabschnitten (2,4) stoffschlüssig verbunden wird.

14. Verfahren nach Anspruch 13, **dadurch gekennzeichnet, daß** der Trägerabschnitt (3) mit den Verformungsabschnitten (2,4) verschweißt wird.

15. Verfahren nach einem der Ansprüche 12 bis 14, **dadurch gekennzeichnet, daß** der Trägerabschnitt (3) während der Kaltumformung der Platine (1) im wesentlichen keiner Verformung unterworfen wird.

## Claims

1. Blank for the production of a sheet panel (11) for a bodywork part of automotive bodywork, in particular for a motor vehicle door (6), by cold forming having
- two deformation sections (2,4), which consist of a highly ductile sheet metal material and are adapted to be subjected to a high degree of deformation in the course of cold forming, and
- a support section (3), which is arranged between the two deformation sections (2, 4) and is formed from a material possessing increased strength, wherein the support section (3) is adapted to be subjected to only a small degree of deformation in the course of cold forming and after forming of the blank (1) to provide the side crash support of the respective bodywork part.

2. Blank according to Claim 1, **characterized in that** the deformation sections (2, 4) and the support section (3) are integrally connected together.

3. Blank according to Claim 2, **characterized in that** the deformation sections (2, 4) and the support section (3) are welded together.

4. Blank according to any one of the preceding claims, **characterized in that** the support section (3) is profiled.

5. Blank according to any one of the preceding claims, **characterized in that** at least one stiffening corrugation (7, 8) is moulded into the support section (3) .

6. Blank according to Claim 4 or 5, **characterized in that** the support section (3) at each of its narrow sides has a non-profiled boundary region (9, 10).

7. Blank according to any one of the preceding claims, **characterized in that** the deformation sections (2, 4) and the support section (3) are made of steel material.

8. Motor vehicle door, which has at least one sheet panel (10), which has an upper section (2), formed from a thin-walled sheet metal material, a support section (3) rigidly connected to the upper section (2) and extending over the width of the door as well as a lower section (4) likewise formed from a thinner sheet metal material and rigidly connected to the support section, **characterized in that** the support section (3) consists of a material possessing increased strength.

9. Motor vehicle door according to Claim 8, **characterized in that** the upper section (2) comprises a window opening (5).

10. Motor vehicle door according to either of Claims 8 and 9, **characterized in that** the support section (3) is concealed on its exterior (12) outwardly lying in the assembled condition by a protective strip (14).

11. Motor vehicle door according to any one of Claims 8 to 10, **characterized in that** the sheet panel is the outer sheet panel (10).

12. Method for the fabrication of a sheet panel (10) for a bodywork part of a motor vehicle, in particular for the fabrication of a sheet panel (10) of a vehicle door (6) fabricated according to any one of Claims 8 to 11,
- in the case of which a blank (1) is formed by attaching a deformation section (2, 4), which consists of a highly ductile sheet metal material differing from the material of the support section on each longitudinal side of a support section (3) formed from a sheet metal material having increased strength, and
- in the case of which the sheet panel (10) of the bodywork part is cold-formed from the blank (1).

13. Method according to Claim 12, **characterized in that** the support section (3) is integrally connected to the deformation sections (2, 4).

14. Method according to Claim 13, **characterized in that** the support section (3) is welded to the deformation sections (2, 4) .

15. Method according to any one of Claims 12 to 14, **characterized in that** the support section (3) is essentially not subjected to any deformation during cold forming of the blank (1).

## Revendications

1. Flan pour la production d'une tôle (11) pour une pièce de carrosserie d'un véhicule automobile, en particulier pour une porte (6) d'automobile, par formage à froid, avec
- deux sections (2, 4) de formage constituées d'une tôle en matière bien déformable, et adaptées à subir un formage profond à la suite du formage à froid, et
- une section de support (3) agencée entre les deux sections (2, 4) de formage et réalisée en une matière présentant une résistance supérieure, la section de support (3) étant adaptée à ne subir qu'une légère déformation après le formage à froid et à former après formage du flan (1) le support latéral anti-choc de la pièce de carrosserie correspondante.

2. Flan selon la revendication 1, **caractérisé en ce que** la section (2, 4) de formage et la section de support (3) sont assemblées l'une à l'autre par liaison de matière.

3. Flan selon la revendication 2, **caractérisé en ce que** la section (2, 4) de formage et la section de support (3) sont soudées l'une à l'autre.

4. Flan selon l'une des revendications précédentes, **caractérisé en ce que** la section de support (3) est profilée.

5. Flan selon l'une des revendications précédentes, **caractérisé en ce que**, dans la section de support (3), est formée au moins un collet raidisseur (7, 8).

6. Flan selon la revendication 4 ou 5, **caractérisé en ce que** la section de support (3) présente, sur chacun de ses côtés étroits, un zone marginale non profilée (9, 10).

7. Flan selon l'une des revendications précédentes, **caractérisé en ce que** les sections (2, 4) de formage et la section de support (3) sont fabriquées en acier.

8. Porte d'automobile qui présente au moins une tôle (10), qui comprend une section supérieure (2) formée dans une tôle à paroi mince, une section de support (3) reliée fixement à la section supérieure (2) et s'étendant sur la largeur de la porte, ainsi qu'une section inférieure (4), également formée en tôle à paroi mince et reliée fixement à la section de support, **caractérisée en ce que** la section de support (3) consiste en un matériau qui présente une résistance supérieure.

9. Porte d'automobile selon la revendication 8, **caractérisée en ce que** la section supérieure (2) comprend une ouverture (5) de fenêtre.

10. Porte d'automobile selon l'une des revendications 8 ou 9, **caractérisée en ce que** la section de support (3) est recouverte, sur son côté externe (12), situé à l'extérieur à l'état monté, par une baguette de protection (14).

11. Porte d'automobile selon l'une des revendications 8 à 10, **caractérisée en ce que** la tôle est la tôle extérieure (10).

12. Procédé pour la fabrication d'une tôle (10) pour une pièce de carrosserie d'une porte d'automobile, en particulier pour la fabrication d'une tôle (10) d'une porte (6) d'automobile constituée selon l'une des revendications 8 à 11,
- au cours duquel on forme un flan (1) en raccordant à chacun des côtés longitudinaux d'une section de support (3), formée en tôle de résistance surélevée, une section de formage (2, 4) qui consiste en une tôle en matériau bien déformable, différent du matériau de la section de support, et
- au cours duquel, à partir du flan (1), on forme à froid la tôle (10) de la pièce de carrosserie.

13. Procédé selon la revendication 12, **caractérisé en ce que** la section de support (3) est reliée aux sections de formage (2, 4) par liaison de matière.

14. Procédé selon la revendication 13, **caractérisé en ce que** la section de support (3) est soudée aux sections de formage (2, 4).

15. Procédé selon l'une des revendications 12 à 14, **caractérisé en ce que** la section de support (3) n'est sensiblement soumise à aucune déformation pendant le formage à froid du flan (1).
